# EUROPÄISCHE PATENTSCHRIFT

(11) **EP 1 950 855 B1**
(45) Veröffentlichungstag und Bekanntmachung des Hinweises auf die Patenterteilung: **22.06.2011**
(21) Anmeldenummer: 08150667.7
(22) Anmeldetag: 25.01.2008
(51) Int. Cl.: H01S 5/36, H01S 5/04, H01S 5/026

(54) **Organischer Halbleiterlaser und Verfahren zu dessen Herstellung**
Organic semiconductor laser and method for its production
Laser organique semi-conducteur et son procédé de fabrication

(30) Priorität: 25.01.2007 DE 102007003856; 07.03.2007 DE 102007011124
(43) Veröffentlichungstag der Anmeldung: 30.07.2008
(73) Patentinhaber: OSRAM Opto Semiconductors GmbH, 93055 Regensburg (DE)
(72) Erfinder: Reufer, Martin, 85296, Rohrbach (DE); Linder, Norbert, 93138, Lappersdorf (DE)
(74) Vertreter: Epping - Hermann - Fischer

(56) Entgegenhaltungen:
- EP-A- 1 249 903
- EP-A- 1 411 608
- EP-A- 1 503 469
- EP-A- 1 906 497
- EP-A1- 1 035 623
- DE-A1- 19 805 993
- US-A- 5 796 771
- US-A- 5 881 089
- US-B1- 6 330 262
- RIEDL T ET AL: "Tunable organic thin-film laser pumped by an inorganic violet diode laser" APPLIED PHYSICS LETTERS, AIP, AMERICAN INSTITUTE OF PHYSICS, MELVILLE, NY, Bd. 88, Nr. 24, 15. Juni 2006 (2006-06-15), Seiten 241116-241116, XP012082096 ISSN: 0003-6951
- MCGEHEE M.D. ET AL: 'Semiconducting polymer distributed feedback lasers' APPLIED PHYSICS LETTERS, AIP, AMERICAN INSTITUTE OF PHYSICS, MELVILLE, NY, US Bd. 72, Nr. 13, 30 März 1998, Seiten 1536 - 1538, XP012019883 ISSN: 0003-6951

## Beschreibung

Die Erfindung betrifft einen organischen Halbleiterlaser mit einer Schicht aus organisch laseraktivem Material und einem Laserresonator.

Organische Halbleiter können sehr einfach und kostengünstig als aktives Material in spektral abstimmbaren Lasern verwendet werden. Als organisch aktives Material werden in der Regel Polymere sowie kleine Moleküle verwendet. Unter optischer Anregung mit geeigneten externen Laserquellen ist damit Laserbetrieb im kompletten sichtbaren Spektralbereich möglich. Eine direkte elektrische Ansteuerung organischer Halbleiter hat sich aufgrund der geringen Ladungsträgermobilität und der daraus resultierenden Absorption in geladenen Halbleiterfilmen bisher nicht zeigen lassen. Bisher erfolgt die Laseranregung immer über teure und viel Platz verbrauchende externe Laserquellen.

Die Druckschriften EP 1 503 469 A2, US 5 881 089, EP 1 249 903 A2, EP 1 906 497 A1, DE 198 05 993 A1 und M. D. McGehee et. al.: "Semiconducting polymer distributed feedback lasers"; 72(1998)13, Seiten 1536-1538 beschreiben optisch gepumpte organische Halbleiterlaser.

Die Druckschriften US 5 796 771 und EP 1 035 623 A1 beschreiben optisch gepumpte anorganische Halbleiterlaser. Der Erfindung liegt daher unter anderem die Aufgabe zugrunde, eine Lösung aufzuzeigen, wie ein organischer Halbleiterlaser ohne die teuren und Platz verbrauchenden externen Laserquellen angeregt werden kann sowie auch ein Verfahren zur Herstellung eines derartigen organischen Halbleiterlasers.

Gemäß zumindest einer Ausführungsform des organischen Halbleiterlasers umfasst der organische Halbleiterlaser zumindest eine Schicht aus organisch laseraktivem Material und einen Laserresonator, wobei eine optische Pumpquelle einstückig mit dem organischen Halbleiterlaser verbunden ist.

Mit anderen Worten ist die Pumpquelle monolithisch mit dem organischen Halbleiterlaser verbunden. Das heißt, Pumpquelle und organischer Halbleiterlaser sind fest miteinander verbunden und bilden eine Einheit.

Gemäß zumindest einer Ausführungsform des organischen Halbleiterlasers enthält oder besteht die optische Pumpquelle aus einer elektrisch angeregten anorganischen LED (light emitting device). Durch die direkte monolithische Kopplung des organischen Lasers an die Anregungsquelle, können die Kosten für die bisherigen optischen Pumpquellen vermieden werden. Die Herstellung dieses organischen Halbleiterlasers erfolgt vorzugsweise als Erweiterung des bisherigen Chipprozesses, der zur Herstellung einer anorganischen LED eingesetzt wird. Die Pumpquelle kann entweder genau eine anorganische LED umfassen oder aber auch eine Mehrzahl - beispielsweise wenigstens zwei - anorganische LEDs umfassen. Bei der LED kann es sich auch um den LED-Halbleiterchip handeln. Das heißt, der LED-Halbleiterchip kann einstückig mit dem organischen Halbleiterlaser verbunden sein.

Gemäß einer bevorzugten Ausführungsform ist der Laserresonator durch Strukturierung einer Oberfläche des organischen laseraktiven Materials gebildet.

Durch die gezielte Strukturierung der Oberfläche des laseraktiven Materials lässt sich ein so genannter DFB (DFB - **d**istributed **f**eed**b**ack) Resonator erzeugen.

Die Ausbildung der strukturierten Oberfläche zur Bildung eines DFB-Resonators kann an der Oberseite oder auch an der Unterseite für eine Laseremission senkrecht zur Oberfläche als auch seitlich für eine Laseremission seitlich zur Oberfläche, das heißt einer Kantenemission, ausgebildet sein.

Gemäß einer weiteren vorteilhaften Weiterbildung ist das organische laseraktive Material von der anorganischen LED durch eine strahlungsdurchlässige Separationsschicht getrennt. Die Separationsschicht ist dabei zumindest für einen Teil der von der anorganischen LED erzeugten Pumpstrahlung durchlässig. Vorzugsweise ist die Separationsschicht für die in der anorganischen LED erzeugte Pumpstrahlung transparent.

Die Separationsschicht ermöglicht eine im Wesentlichen verlustfrei oder eine verlustfreie Einkopplung der Photonen aus der anorganischen LED in das aktive organische Material.

Bei der Verwendung einer transparenten Separationsschicht kann dann der Laserresonator auch an der Grenzschicht zwischen der transparenten Separationsschicht und dem organisch laseraktiven Material ausgebildet sein.

Gemäß einer weiteren vorteilhaften Weiterbildung ist die Oberfläche der anorganischen LED aufgeraut ausgebildet. Dieses Aufrauen der Oberfläche der anorganischen LED steigert die externe Effizienz dieser anorganischen LEDs. In diesem Fall ist es auch günstig, die Separationsschicht gleichzeitig als Planarisierungsschicht zu verwenden. Das heißt, neben ihren optischen Eigenschaften dient die Separationsschicht dann auch zur Planarisierung der zum Beispiel aufgerauten Oberfläche der anorganischen LED.

Der Auftrag der Planierungsschicht erfolgt vorteilhafterweise durch Beschichtungsprozesse wie Spin-Coating oder Rakeln.

Gemäß einer weiteren Ausführungsform der Erfindung ist die Oberfläche der anorganischen LED in Form eines photonischen Kristalls ausgebildet. Mit anderen Worten weist die dem organischen Material zugewandte Oberfläche der anorganischen LED die Form eines photonischen Kristalls auf oder ist nach Art eines photonischen Kristalls strukturiert. Eine LED mit einer derart ausgebildeten Oberfläche ist zum Beispiel in der Druckschrift WO2006/131087 beschrieben.

Günstigerweise werden die weiteren Schichten über Abscheidungsverfahren wie Aufdampfverfahren und Vakuumsublimation erzeugt, so dass sich dadurch das Oberflächenprofil des photonischen Kristalls auf die weiteren Schichten überträgt und den auf den organischen Laser abgestimmten DFB-Resonator erzeugt.

Gemäß einer weiteren vorteilhaften Ausgestaltung ist die Emissionswellenlänge der anorganischen LED auf die Absorptionsspanne des laseraktiven organischen Materials abgestimmt.

Durch diese Abstimmung wird bewirkt, dass die Anregungsenergie der anorganischen LED im laseraktiven organischen Material deponiert wird.

Weitere vorteilhafte Ausgestaltungen der Erfindung sehen vor, dass der Laserresonator eine tiefe Gitterstruktur aufweist, die einen Gradienten in der Modulationsperiode besitzen. Ein solcher Laserresonator ist zum Beispiel in der Druckschrift "A nearly diffraction limited surface emitting conjugated polymer laser utilizing a two-dimensional photonic band structure, S.Riechel et al., Applied Physics Letters, Volume 77, Number 15, pp 2310-2312" beschrieben. Durch diese Ausbildung ist die Herstellung von abstimmbaren Laserquellen möglich, bei der die Emissionswellenlänge räumlich über die Chipfläche variiert. Zur Verbesserung der Strahlqualität der organischen Laser ist es auch günstig, die Modulation in mehreren Raumrichtungen, zum Beispiel als quadratisches oder hexagonales Gitter, auszuführen.

Gemäß einer alternativen Ausführungsform können auch geringe Modulationstiefen gewählt werden. Diese bewirken, dass sich der effektive verteilte Resonator über die gesamte Chipfläche erstreckt und so monomodige beugungsbegrenzte und kohärente Emission erzeugt werden kann. Ein entsprechender Laserresonator ist zum Beispiel in der Druckschrift "Very compact tunable solid-state laser utilizing a thin-film organic semiconductor, S. Riechel et al., Optics Letters, Vol. 26, No. 9, pp 593-595" beschrieben.

Die Strukturierung des organisch laseraktiven Materials zur Erzeugung des Laserresonators kann je nach Ausprägung mechanisch oder optisch/chemisch erfolgen.

Bezüglich des Verfahrens zur Herstellung eines organischen Halbleiterlasers mit einer organischen laseraktiven Schicht und einem Laserresonator wird die Aufgabe dadurch gelöst, dass eine elektrisch betreibbare anorganische LED mit organischen Schichten aus laseraktivem Material versehen wird.

Vorteilhafterweise erfolgt der Auftrag der weiteren Schichten auf die anorganische LED, wie zum Beispiel einer transparenten Separationsschicht oder der organischen Schicht aus laseraktivem Material durch Abscheidungsverfahren.

Die Herstellung des Laserresonators erfolgt durch Strukturierung der organischen Schicht, welche günstigerweise mechanisch zum Beispiel über einen Stempel oder optisch/chemisch erfolgt.

Die Strukturierung des Laserresonators kann auch über eine Strukturierung der Pumpquelle erfolgen. Werden zum Beispiel die weiteren Schichten auf eine strukturierte Oberfläche der anorganischen LED aufgetragen, wird somit automatisch die Struktur des Laserresonators an der Oberfläche der organischen Schicht erzeugt.

Anspruch 1 offenbart einen Laser gemäß der Erfindung. Anspruch 10 definiert ein zugehöriges Herstellungsverfahren.

Weitere Vorteile und Ausführungsformen der Erfindung sind in den Unteransprüchen sowie in der nachfolgenden Figurenbeschreibung offenbart.

Nachfolgend wird anhand in den Zeichnungen dargestellter Ausführungsbeispiele die Erfindung näher erläutert. In den Zeichnungen zeigen:
- Figur 1: einen schematischen Aufbau des erfindungsgemäßen organischen Halbleiterlasers,
- Figur 2: den prinzipiellen Aufbau aus Figur 1 mit angerauter Oberfläche der anorganischen LED, und
- Figur 3: ebenfalls den prinzipiellen Aufbau aus Figur 1 mit Ausbildung der Oberfläche der anorganischen LED in photonischer Kristallstruktur.

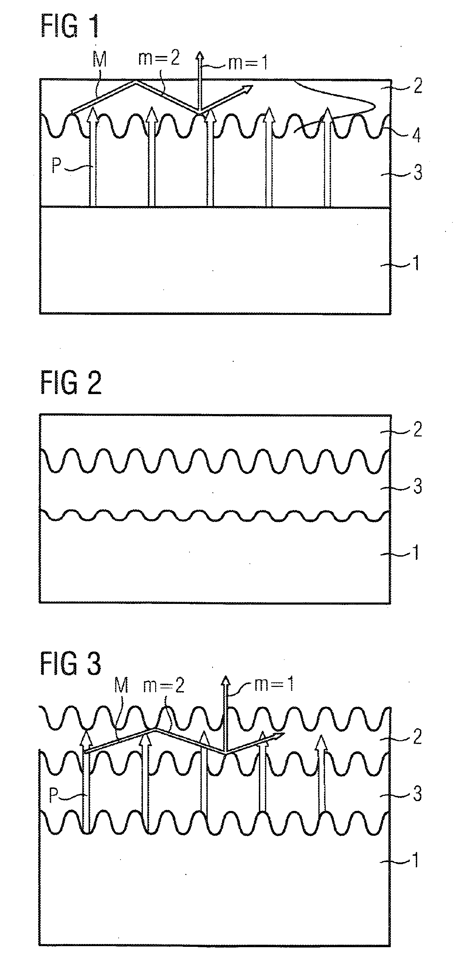

Figur 1 zeigt den prinzipiellen Aufbau des erfindungsgemäßen organischen Halbleiterlasers.

Eine konventionelle anorganische LED 1 wird mit einer Schicht aus organischem laseraktivem Material 2 versehen. Bei elektrischem Betrieb der anorganischen LED 1 wird Licht von der Oberfläche in die Schicht aus organischem laseraktivem Material 2 emittiert. Diese Schicht aus organisch laseraktivem Material kann aus mehreren organischen Schichten beziehungsweise Filmen bestehen.

Zwischen der anorganischen LED 1 und der Schicht aus organischem laseraktivem Material 2 ist eine transparente Separationsschicht 3 angeordnet. Diese Separationsschicht 3 ermöglicht eine verlustfreie Einkopplung der Photonen aus der anorganischen LED in das aktive organische Material.

Aufgrund des Brechungsindexunterschiedes zwischen anorganischen Kristallen (n > 2) und organischen Materialien (n < 2) ist die Separationsschicht für die Modenführung von großer Bedeutung. Die Separationsschicht 3, die einen geringeren Brechungsindex als das aktive organische Material 2 besitzt, ermöglicht aufgrund des Brechungszahlunterschieds eine effiziente Entkopplung der Lasermode von der anorganischen LED, sodass die Lasermode vornehmlich im aktiven organischen Material geführt wird und dort die optische Verstärkung erfährt.

Beispielsweise enthält oder besteht die Separationsschicht aus einem Kunststoffmaterial wie beispielsweise Polyethylenterephthalat (PET).

Die Separationsschicht ist von zentraler Bedeutung.

Das aktive organische Material ist in seiner Schichtdicke so ausgebildet, dass eine geführte Mode im organischen Film propagieren kann.

Zur Ausbildung eines Laserresonators 4 ist eine Oberfläche des organischen laseraktiven Materials nicht plan, sondern derart strukturiert, dass an den periodischen Erhebungen ein Teil der geführten Mode in einer Ebene reflektiert wird und zur Ausbildung eines verteilten so genannten DFB (DFB - **d**istributed **f**eed**b**ack) Resonators kommt.

Durch die anorganische LED 1 wird so genanntes Pumplicht P zur Anregung des laseraktiven organischen Materials 2 ausgesandt.

Dieses Pumplicht P durchdringt die transparente Separationsschicht 3 und trifft auf den Laserresonator 4.

Die im organisch laseraktiven Material entstehende Mode M wird an der Struktur des Laserresonators 4 gebeugt, sodass ein Teil der Mode m = 2 reflektiert und durch die Rückkopplung die Ausbildung einer stehenden Welle erzeugt wird.

Der andere Teil m = 1 bildet das emittierte Laserlicht, welches senkrecht zur Oberfläche bei dem hier dargestellten DFB-Resonator in zweiter Ordnung abgestrahlt wird.

Bei dem Ausführungsbeispiel gemäß Figur 1 ist die DFB-Struktur, das heißt der DFB-Resonator an der Grenzfläche zwischen Separationsschicht 3 und laseraktivem Material 2 ausgebildet.

Gemäß einem nicht dargestellten Ausführungsbeispiel kann die DFB-Struktur ebenso auch an der Oberseite des laseraktiven Materials 2 vorgesehen sein.

Die DFB-Struktur kann auch als DFB-Resonator in erster Ordnung ausgebildet sein, wobei dann die Emission der Laserstrahlung aus der Kante, das heißt seitlich, erfolgt. Ein wesentlicher Vorteil von den DFB-Resonatoren in erster Ordnung ist eine Reduktion der Laserschwelle aufgrund niedriger Auskoppelverluste.

Figur 2 zeigt eine alternative Ausführungsform der erfindungsgemäßen Laserquelle. Die anorganische LED 1 ist hierbei mit einer aufgerauten Oberfläche versehen. Eine aufgeraute Oberfläche der anorganischen LED steigert die externe Effizienz. Dies kann zum Beispiel darauf zurückzuführen sein, dass die Wahrscheinlichkeit für eine Totalreflexion der aus der anorganischen LED austretenden Strahlung aufgrund der Aufrauung verringert ist.

In diesem Fall kann die Separationsschicht 3 gleichzeitig auch als Planierungsschicht verwendet werden.

Zum Aufbringen der Separationsschicht 3 sind vorzugsweise Beschichtungsprozesse, wie Spin-Coating oder Rakeln, geeignet.

Bei diesen Beschichtungsprozessen werden die gewünschten Materialien in Lösungsmitteln gelöst und dann aus der flüssigen Phase verarbeitet.

Der konzeptionelle Ansatz, den DFB-Resonator beziehungsweise Laserresonator 4 entweder an der Grenzfläche zwischen der Separationsschicht 3 und dem laseraktiven Material 2 oder an der Oberfläche des organischen laseraktiven Materiales 2 zu erzeugen, bleibt von der Planarisierung unberührt.

Figur 3 zeigt eine weitere Ausführungsform der Erfindung.

Bei dieser Ausführungsform gemäß Figur 3 ist zur Steigerung der Lichtauskopplung die Oberfläche der anorganischen LED in Form eines photonischen Kristalls ausgebildet. Bei geeigneter photonischer Kristallstruktur der Oberfläche, das heißt der geeigneten Ausbildung der Gitterperiode und der Modulationstiefe, bewirkt der photonische Kristall eine deutliche Erhöhung der Auskoppeleffizienz und Direktionalität der LED.

Bei der Wahl geeigneter Abscheidungsverfahren für die weiteren Schichten, wie zum Beispiel Aufdampfverfahren und Vakuumsublimation, überträgt sich das Oberflächenprofil an der Oberfläche der anorganischen LED in Form des photonischen Kristalls auf die weiteren Schichten und erzeugt damit den auf den organischen Laser abgestimmten DFB-Resonator.

Durch das Aufbringen der weiteren Schichten auf die Oberfläche der anorganischen LED in Form einer photonischen Kristallstruktur wird somit automatisch an der Oberbeziehungsweise Unterseite der organisch laseraktiven Schicht 2 der DFB-Resonator erzeugt.

Bei allen Ausführungsformen ist es günstig, wenn die Emissionswellenlänge der anorganischen LED auf die Absorptionsbande des laseraktiven organischen Materials abgestimmt wird, sodass die Anregungsenergie der anorganischen LED im aktiven Material deponiert wird.

Bei allen drei Ausführungsformen variiert die Kopplungs- und damit die effektive Resonatorlänge je nach Modulationstiefe der periodischen Struktur.

Werden zum Beispiel tiefe Gitterstrukturen verwendet, die einen Gradienten in der Modulationsperiode besitzen, sind abstimmbare Laserquellen möglich, bei der die Emissionswellenlänge räumlich über die Chipfläche variiert.

Zur Verbesserung der Strahlqualität der organischen Laser bietet es sich an, die Modulation in mehreren Raumrichtungen, zum Beispiel als quadratisches oder hexagonales Gitter, auszuführen.

Geringe Modulationstiefen hingegen bewirken, dass sich der effektive verteilte Resonator über die gesamte Chipfläche erstreckt, um so monomodige beugungsbegrenzte und kohärente Emission erzeugt werden kann.

Die Strukturierung der Oberfläche der anorganischen LED beziehungsweise der organisch laseraktiven Schicht zur Ausbildung des Resonators kann wie oben beschrieben durch Aufbringen weiterer Schichten auf eine photonische Kristallstruktur oder mechanisch oder optisch/chemisch erfolgen.

Beispielhaft sind folgende weitere Verfahren genannt:
- Abformverfahren, zum Beispiel mittels eines Stempels,
- Modifizierung der optischen Eigenschaften, zum Beispiel holografische Belichtung, bei der entweder das aktive Material oder die Separationsschicht lokal vernetzt und damit lokal inert gegen Lösungsmittel wird (Fototechnik),
- holografische Belichtung, bei der die optischen Eigenschaften des Materials lokal modifiziert werden, was mit einer Änderung im Brechungsindex einhergeht,
- Anordnung von Nanopartikeln geeigneter Größe, zum Beispiel durch Selbstorganisation.

Durch die Erfindung, wie sie durch die Ausführungsbeispiele gemäß den Figuren 1 bis 3 wiedergegeben wird, lässt sich eine Platz sparende und kostengünstige Laserquelle herstellen. Aufgrund der Variabilität bei der Auswahl des organischen Materials und der Laserresonatorgeometrie lässt sich basierend auf dieser Idee Laseremission bei frei wählbarer Wellenlänge im gesamten sichtbaren Spektralbereich erzeugen. Die Erfindung ist somit sowohl für spektroskopische als auch für Displayanwendungen von zentraler Bedeutung.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

## Patentansprüche

1. Organischer Halbleiterlaser mit einer Schicht aus organisch laseraktivem Material (2) und einem Laserresonator (4),
einer optischen Pumpquelle, die mit der Schicht aus organisch laseraktivem Material (2) fest verbunden ist und mit der Schicht aus organisch laseraktivem Material (2) eine Einheit bildet, wobei
die optische Pumpquelle eine elektrisch betriebene anorganische LED ist, wobei LED für "light emitting device" steht, und wobei
- das organisch, laseraktive Material von der anorganischen LED durch eine strahlungsdurchlässige Separationsschicht getrennt ist;
- anorganische Kristalle der anorganischen LED (1) einen Brechungsindex von n > 2 aufweisen;
- das organisch, laseraktive Material (2) einen Brechungsindex von n < 2 aufweist,
- die Separationsschicht (3) einen geringeren Brechungsindex als das organisch, laseraktive Material (2) besitzt;
- die Oberfläche der anorganischen LED (1) die Form eines photonischen Kristalls aufweist;
- das Oberflächenprofil der Oberfläche der anorganischen LED auf die laseraktive Schicht aus organischem Material übertragen ist und somit der Laserresonator (4) gebildet ist.

2. Organischer Halbleiterlaser nach Anspruch 1,
**dadurch gekennzeichnet, dass**
der Laserresonator (4) durch Strukturierung einer Oberfläche des organisch laseraktiven Materials (2) gebildet ist.

3. Organischer Halbleiterlaser nach Anspruch 2,
**dadurch gekennzeichnet, dass**
der Laserresonator (4) an der Grenzschicht zwischen der Separationsschicht (3) und dem organisch laseraktiven Material (2) ausgebildet ist.

4. Organischer Halbleiterlaser nach einem der Ansprüche 1 bis 3,
**dadurch gekennzeichnet, dass**
die Oberfläche der anorganischen LED (1), welche zu der Schicht aus organisch laseraktivem Material (2) zeigt, aufgeraut ausgebildet ist.

5. Organischer Halbleiterlaser nach Anspruch 4,
**dadurch gekennzeichnet, dass**
die Separationsschicht (3) eine Planarisierungsschicht bildet.

6. Organischer Halbleiterlaser nach einem der Ansprüche 1 bis 5,
**dadurch gekennzeichnet, dass**
der Laserresonator (4) als DFB - Resonator ausgebildet ist, wobei DFB für "distributed feedback" steht.

7. Organischer Halbleiterlaser nach einem der Ansprüche 1 bis 6,
**dadurch gekennzeichnet, dass**
die Emissionswellenlänge der Pumpquelle auf die Absorptionsbande des organisch laseraktiven Materials (2) abgestimmt ist.

8. Organischer Halbleiterlaser nach einem der Ansprüche 1 bis 7,
**dadurch gekennzeichnet, dass**
der Laserresonator mit einer periodischen Struktur in mehreren Raumrichtungen, zum Beispiel quadratisch oder hexagonales Gitter, ausgeführt ist.

9. Organischer Halbleiterlaser nach einem der Ansprüche 1 bis 8,
**dadurch gekennzeichnet, dass**
die Strukturierung des Laserresonators (4) mechanisch oder optisch und/oder chemisch erfolgt ist.

10. Verfahren zur Herstellung eines organischen Halbleiterlasers gemäß einem der vorhergehenden Ansprüche mit einer organischen laseraktiven Schicht (2) und einem Laserresonator (4), wobei eine optische Pumpquelle mit der Schicht aus organisch laseraktivem Material (2) versehen wird, die optische Pumpquelle mit der Schicht aus organisch laseraktivem Material (2) fest verbunden wird und mit Schicht aus organisch, laseraktivem Material (2) eine Einheit bildet,
**dadurch gekennzeichnet, dass**
die optische Pumpquelle eine elektrisch betriebene anorganische LED ist.

11. Verfahren nach Anspruch 10,
**dadurch gekennzeichnet, dass**
auf die anorganische LED (1) die weiteren Schichten, wie zum Beispiel eine transparente Separationsschicht (3) oder die Schicht aus organisch laseraktivem Material (2) durch Abscheidungsverfahren aufgetragen werden.

12. Verfahren nach Anspruch 10,
**dadurch gekennzeichnet, dass** der Auftrag einer Separationsschicht (3) durch Beschichtungsprozesse wie Spin-Coating oder Rakeln erfolgt, wobei die Separationsschicht dann als eine Planarisierungsschicht Verwendung findet.

13. Verfahren nach einem der Ansprüche 10, 11 oder 12,
**dadurch gekennzeichnet, dass**
der Laserresonator (4) durch eine Strukturierung der laseraktiven organischen Schicht (2) hergestellt wird.

14. Verfahren nach Anspruch 13,
**dadurch gekennzeichnet, dass**
die Herstellung der Strukturierung mechanisch erfolgt.

15. Verfahren nach Anspruch 13,
**dadurch gekennzeichnet, dass**
die Herstellung der Strukturierung für die Ausbildung des Laserresonators (4) durch optische und/oder chemische Verfahren erfolgt.

## Claims

1. Organic semiconductor laser comprising a layer composed of organically laser-active material (2) and a laser resonator (4),
an optical pump source, which is fixedly connected to the layer composed of organically laser-active material (2) and forms a unit with the layer composed of organically laser-active material (2), wherein the optical pump source is an electrically operated inorganic LED, where LED stands for 'Light Emitting Device', and wherein
- the organically laser-active material is separated from the inorganic LED by a radiation-transmissive separation layer;
- inorganic crystals of the inorganic LED (1) have a refractive index of n > 2;
- the organically laser-active material (2) has a refractive index of n < 2;
- the separation layer (3) has a lower refractive index than the organically laser-active material (2);
- the surface of the inorganic LED (1) has the form of a photonic crystal;
- the surface profile of the surface of the inorganic LED is transferred to the laser-active layer composed of organic material and the laser resonator (4) is thus formed.

2. Organic semiconductor laser according to Claim 1, **characterized in that** the laser resonator (4) is formed by patterning a surface of the organically laser-active material (2).

3. Organic semiconductor laser according to Claim 2,
**characterized in that** the laser resonator (4) is formed at the interface layer between the separation layer (3) and the organically laser-active material (2).

4. Organic semiconductor laser according to one of Claims 1 to 3,
**characterized in that** the surface of the inorganic LED (1) which faces the layer composed of organically laser-active material (2) is formed in roughened fashion.

5. Organic semiconductor laser according to Claim 4,
**characterized in that** the separation layer (3) forms a planarization layer.

6. Organic semiconductor laser according to one of Claims 1 to 5,
**characterized in that** the laser resonator (4) is formed as a DFB resonator, where DFB stands for 'Distributed feedback'.

7. Organic semiconductor laser according to one of Claims 1 to 6,
**characterized in that** the emission wavelength of the pump source is coordinated with the absorption band of the organically laser-active material (2).

8. Organic semiconductor laser according to one of Claims 1 to 7,
**characterized in that** the laser resonator is embodied with a periodic structure in a plurality of spatial directions, for example square or hexagonal grating.

9. Organic semiconductor laser according to one of Claims 1 to 8,
**characterized in that** the patterning of the laser resonator (4) is effected mechanically or optically and/or chemically.

10. Method for producing an organic semiconductor laser according to one of the preceding claims, comprising an organic laser-active layer (2) and a laser resonator (4), wherein an optical pump source is provided with the layer composed of organically laser-active material (2), the optical pump source is fixedly connected to the layer composed of organically laser-active material (2) and form a unit with the layer composed of organically laser-active material (2),
**characterized in that** the optical pump source is an electrically operated inorganic LED.

11. Method according to Claim 10,
**characterized in that** the further layers such as, for example, a transparent separation layer (3) or the layer composed of organically laser-active material (2) are applied to the inorganic LED (1) by deposition methods.

12. Method according to Claim 10,
**characterized in that** the application of a separation layer (3) is effected by coating processes such as spin-coating or blade coating, the separation layer then being used as a planarization layer.

13. Method according to one of Claims 10, 11 or 12,
**characterized in that** the laser resonator (4) is produced by a patterning of the laser-active organic layer (2).

14. Method according to Claim 13,
**characterized in that** the production of the patterning is effected mechanically.

15. Method according to Claim 13,
**characterized in that** the production of the patterning for the formation of the laser resonator (4) is effected by optical and/or chemical methods.

## Revendications

1. Laser à semi-conducteur organique présentant
une couche de matériau organique (2) à action laser et un résonateur laser (4),
une source de pompage optique reliée solidairement à la couche de matériau organique (2) à action laser et formant une entité avec la couche de matériau organique (2) à action laser,
la source de pompage optique étant une LED minérale alimentée en électricité, LED signifiant "light emitting device" - dispositif émettant de la lumière,
le matériau organique à action laser étant séparé de la LED minérale par une couche de séparation transparente vis-à-vis du rayonnement,
des cristaux minéraux de la LED minérale (1) ayant un indice de réfraction n > 2,
le matériau organique (2) à action laser ayant un indice de réfraction n < 2,
la couche de séparation (3) ayant un indice de réfraction plus petit que la couche de matériau organique (2) à action laser,
la surface de la LED minérale (1) ayant la forme d'un cristal photonique et
le profil de la surface de la LED minérale étant transféré sur la couche de matériau organique à action laser, ce qui forme le résonateur laser (4).

2. Laser à semi-conducteur organique selon la revendication 1, **caractérisé en ce que** le résonateur laser (4) est formé par structuration d'une surface du matériau organique (2) à action laser.

3. Laser à semi-conducteur organique selon la revendication 2, **caractérisé en ce que** le résonateur laser (4) est formé sur la couche frontière entre la couche de séparation (3) et le matériau organique (2) à action laser.

4. Laser à semi-conducteur organique selon l'une des revendications 1 à 3, **caractérisé en ce que** la surface de la LED minérale (1) tournée vers la couche de matériau organique (2) à action laser est rendue rugueuse.

5. Laser à semi-conducteur organique selon la revendication 4, **caractérisé en ce que** la couche de séparation (3) forme une couche de planarisation.

6. Laser à semi-conducteur organique selon l'une des revendications 1 à 5, **caractérisé en ce que** le résonateur laser (4) est configuré comme résonateur DFB, DFB signifiant "distributed feedback" - rétroaction répartie.

7. Laser à semi-conducteur organique selon l'une des revendications 1 à 6, **caractérisé en ce que** la longueur d'onde d'émission de la source de pompage est accordée sur la bande d'absorption du matériau organique (2) à action laser.

8. Laser à semi-conducteur organique selon l'une des revendications 1 à 7, **caractérisé en ce que** le résonateur laser est réalisé avec une structure périodique dans plusieurs directions de l'espace, par exemple en grille carrée ou hexagonale.

9. Laser à semi-conducteur organique selon l'une des revendications 1 à 8, **caractérisé en ce que** la structuration du résonateur laser (4) est réalisée par voie mécanique, optique et/ou chimique.

10. Procédé de fabrication d'un laser à semi-conducteur organique selon l'une des revendications précédentes, doté d'une couche de matériau organique (2) à action laser et d'un résonateur laser (4), une source de pompage optique étant dotée de la couche de matériau organique (2) à action laser, la source de pompage optique étant reliée solidairement à la couche de matériau organique (2) à action laser et formant une entité avec la couche de matériau organique (2) à action laser,
**caractérisé en ce que**
la source de pompage optique est une LED minérale alimentée en électricité.

11. Procédé selon la revendication 10, **caractérisé en ce que** les autres couches, par exemple une couche transparente de séparation (3) ou la couche de matériau organique (2) à action laser, sont appliquées sur la LED minérale (1) par des procédés de dépôt.

12. Procédé selon la revendication 10, **caractérisé en ce que** l'application d'une couche de séparation (3) s'effectue par des opérations de revêtement telles qu'un revêtement par centrifugation ou une application au racloir et **en ce que** la couche de séparation est alors utilisée comme couche de planarisation.

13. Procédé selon l'une des revendications 10, 11 ou 12, **caractérisé en ce que** le résonateur laser (4) est réalisé par structuration de la couche de matériau organique (2) à action laser.

14. Procédé selon la revendication 13, **caractérisé en ce que** la structuration est formée par voie mécanique.

15. Procédé selon la revendication 13, **caractérisé en ce que** la structuration est réalisée en vue de former le résonateur laser (4) par un procédé optique et/ou chimique.
